# EUROPEAN PATENT APPLICATION

(11) **EP 1 524 426 A2**
(43) Date of publication of application: **20.04.2005**
(21) Application number: 04255391.7
(22) Date of filing: 04.09.2004
(51) Int. Cl.: F02M 21/02

(54) **Adaptor socket for CNG fuel injection**

(30) Priority: 13.10.2003 GB 0323944; 14.11.2003 GB 0326548
(71) Applicant: Delphi Technologies, Inc., Troy, MI 48007 (US)
(72) Inventor: Ferramacho, Antonio, Hobscheid L8373 (LU)
(74) Representative: Jones, Keith William

(57) **Abstract**

An adaptor socket (22) for connecting a gaseous fuel injector (24) to a port (4) in an intake manifold or flange (2) of an internal combustion engine, said socket being adapted to fit said port (4) and having a mounting aperture (31) for mounting a gaseous fuel injector (24) such that the gaseous fuel injector (24) can inject gaseous fuel into said intake manifold (2) via said port (4). The socket (22) further comprises means for enhancing the mixing of gaseous fuel and air within the intake manifold, said means comprising a lip or extension (46) provided or formed on the socket (22), said lip (46) extending into the path or passageway of incoming air within the manifold (2), upstream of a spray nozzle of the fuel injector (24).

## Description

The present invention relates to a system for adapting an existing gasoline fuel engine to also receive gaseous fuel.

Because of fuel costs, efficiency, etc. it is increasingly desired to have bi-fuel engines for vehicles, that is engines adapted to run using gasoline fuels such as petrol, and gaseous fuel such as compressed natural gas (CNG).

For such bi-fuel engines, independent injection systems are required for each type of fuel. However, there is a significant cost in the development of any new part of an engine, such as the intake manifold. New engine parts require significant time and effort both in terms of development and cost, as well as additional testing for both emission regulation compliance and fuel system collision integrity. Such modifications may also include alteration of cylinder heads, manifolds and combustion chamber configurations, as well as new tooling investment.

US6550459 discusses the introduction of a gas fuel system to an engine having a proven gasoline fuel injection system, whereby a separate injector block is created, and separate feed lines lead to an adapter plate. The adapter plate includes gas distributors which feed the gaseous fuel into each port of the intake manifold. However, this system still requires adaptation of the intake manifold to accommodate the new adapter plate, as well as consideration as to the accommodation and integrity of the individual feed lines.

One object of the present invention is to provide a simpler adaptation of a gasoline fuel engine to accommodating a gaseous fuel injector system.

Thus, according to one aspect of the present invention, there is provided an adaptor socket for connecting a gaseous fuel injector to a port in an intake manifold or flange of an internal combustion engine, said socket being adapted to fit said port and having a mounting aperture for mounting a gaseous fuel injector such that the gaseous fuel injector can inject gaseous fuel into said intake manifold via said port.

The manifold port is an existing port, which can be adapted for use in a gaseous fuel injection system by use of the present invention. As in the specific embodiment described herein, such existing manifold ports may include de-activation ports. Some intake manifolds are currently designed with a port de-activation (PDA) system, although other existing manifold ports could be used.

According to one embodiment of the present invention, at least a portion of the socket extends into said port. Preferably, the portion of the socket which extends into said port terminates in a face adapted to form a continuation of the inner surface of intake manifold adjacent the port into which the socket is inserted to ensure smooth airflow within the manifold. Preferably the socket also includes a securing flange or portion permitting the socket to be secured to the intake manifold.

According to a preferred embodiment of the present invention, the gaseous fuel is compressed natural gas (CNG).

Preferably the socket further comprises means for enhancing the mixing of gaseous fuel and air within the intake manifold, said means comprising a lip or extension provided or formed on the socket, said lip extending into the path or passageway of incoming air within the manifold, upstream of a spray nozzle of the fuel injector.

By increasing the overlap of air direction with injected gaseous fuel direction, increased mixing of the fuel and air is achieved, leading to increased and cleaner combustion of the fuel.

According to a third aspect of the present invention, there is provided an intake manifold or flange having one or more gaseous fuel injector sockets as hereinbefore described.

According to a fourth aspect of the present invention, there is provided an internal combustion engine having a gasoline fuel system and one or more further manifold ports, wherein the or each further manifold port includes a gaseous fuel injector socket as hereinbefore described.

Embodiments of the present invention will now be described by way of example only and with reference to the accompanying drawings in which:
Figure 1 is a perspective view of a prior art Z16 ZEP flange with PDA rotating flap system;
Figure 2 is a perspective view of the flange of Figure 1 including injector adapter sockets according to one embodiment of the present invention;
Figure 3 is a perspective view of the flange of Figure 2, with the addition of CNG injectors and fuel rails;
Figure 4 is a side view of Figure 3, including attached manifold;
Figure 5 is a cross-sectional view of the flange, socket and CNG adapter of Figure 3;
Figures 6a and 6b are side and perspective views of an injector socket according to one embodiment of the present invention;
Figures 7c and 7b are a perspective photograph of a prior art injector socket, and a schematic drawing of its effect; and
Figures 8a and 8b are a perspective photograph of an injector socket according to another embodiment of the present invention, and a schematic drawing of the effect thereof.

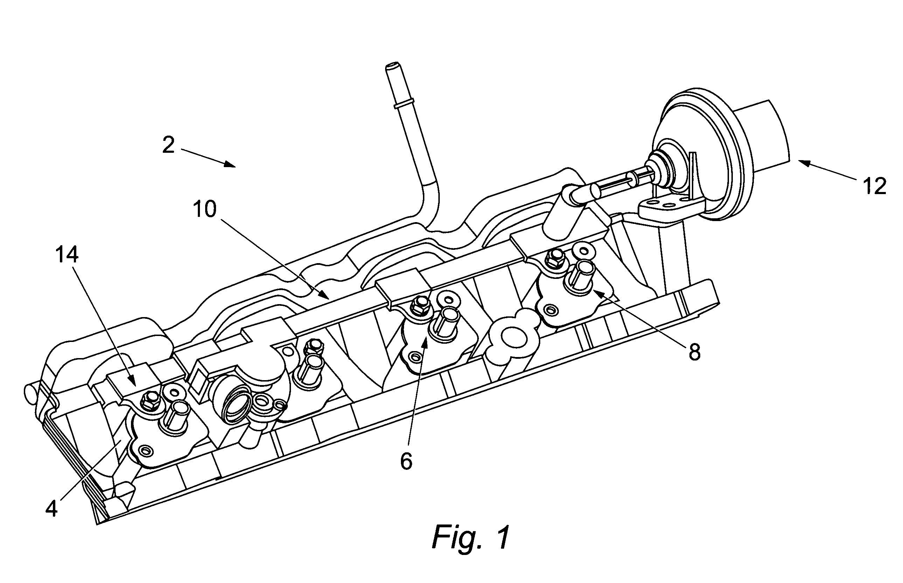

Referring to the drawings, figure 1 shows an existing Z16 XEP flange part 2 of the intake manifold. A port de-activation system is provided using rotating flaps inserted through ports 4 provided in the manifold or flange 2. Each flap is rotatably mounted with a respective intake port or duct 16 of the flange using a plastic lever 6 biased by a spring clip 8. The levers 6 are actuated by a metallic link piece 10 which is operated by a pneumatic actuator 12 at one end. The metal strip 10 is connected to the flaps using clips 14, and the position of the flaps can be sensed using sensors located under each flap.

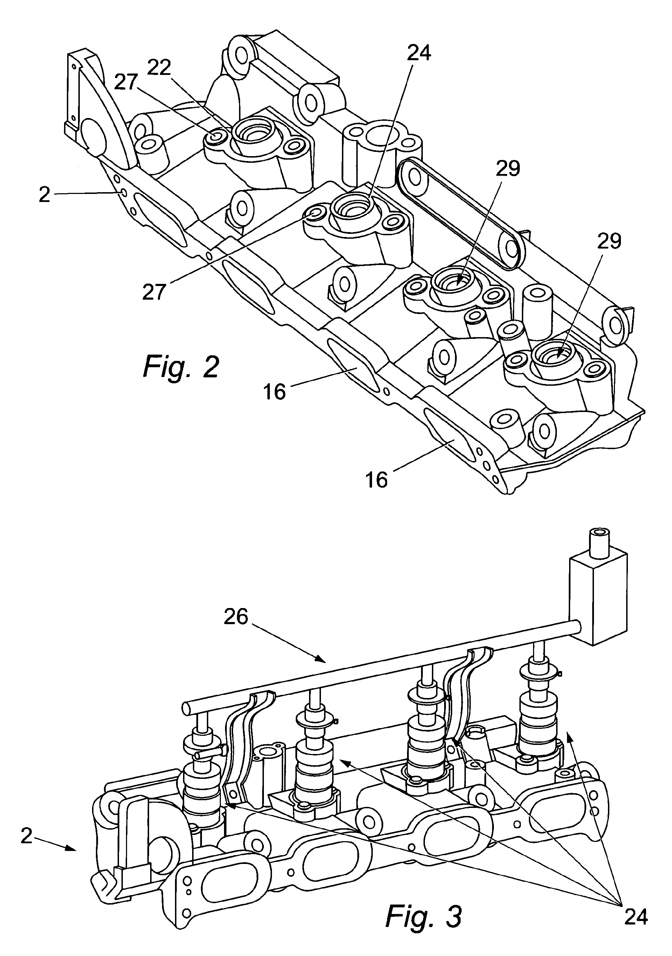

Each flap can selectively covers an intake duct 16. The ducts 16 are shown more clearly in Figure 2.

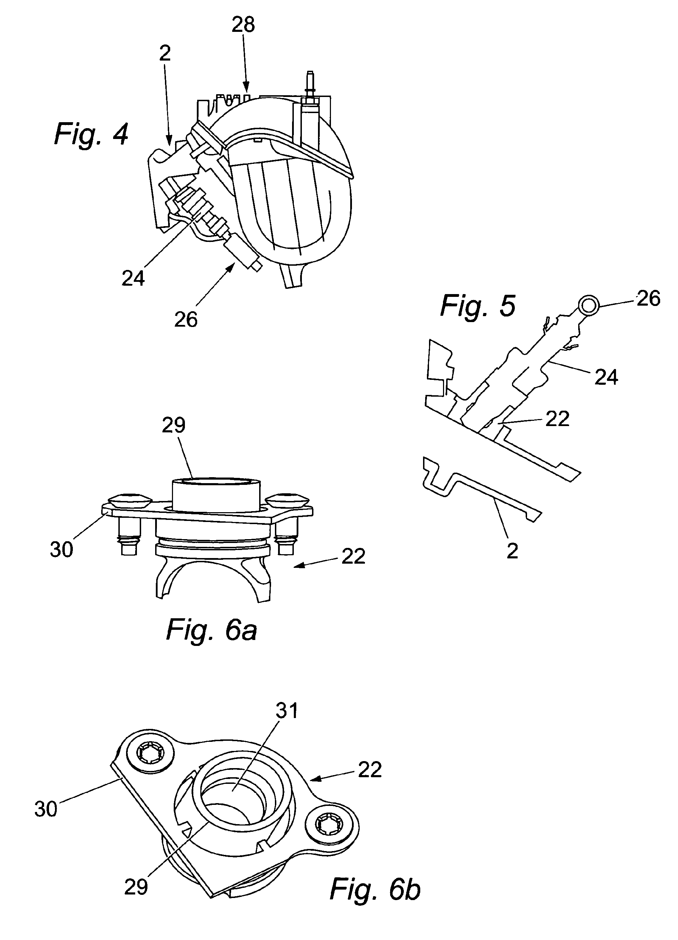

The present invention involves using the same ports 4 that exist in the flange 2 for the introduction of gaseous fuel injectors as shown in Figure 3.

Gaseous fuel injectors 24 such as those shown in Figure 3 are known in the art, and are shown in Figure 3 as being supplied by a fuel rail 26.

On each port 4, there is provided a gaseous fuel injector socket 22 which can be secured to the flange 2 using the existing fixing holes 27.

One advantage of the present invention is better shown in Figure 4. Figure 4 shows the general manifold 28 of the Z16 XEP engine. Attached to the manifold 26 is the flange 2. It can be seen in Figure 4 that there is little room, either on the manifold 28 or on the flange 2, to provide any space for a separate fuel injector system, without redesign of the manifold or flange. Redesign, either by new casting or machining is a significant exercise, which the present invention avoids. Indeed, by replacing the port de-activation system as shown in Figure 1, no new casting or machining is required, avoiding costs at this level.

Figure 5 shows a cross sectional view of the flange 2, port 4, injector socket 22, CNG fuel injector 24, and the fuel rail 26.

Figures 6a and 6b show views of the injector socket 22. Such a socket 22 can easily be formed by plastic injection moulding or the like, at relatively low cost, and having ease of fittment into the port 4. Thus, limited new tooling is required to effect the ability of the engine to which the flange 2 is attached to now have a gasoline fuel system and a gaseous fuel system.

Figures 6a and 6b show socket 22 comprising a gaseous fuel injector receiving portion 29, and a port connection portion 30. A fuel injector mounting aperture 31 is provided within the receiving portion 29 of the socket 22 for insertion of the lower portion of a gaseous fuel injector 24. The longitudinal axis of the mounting aperture 31 is inclined with respect to the axis of the port 4 within which the socket 20 is received such that the gaseous fuel injector directs fuel in a downstream direction into the flow of air in the intake duct 16 of the flange 2 to improve fuel and air mixing within the duct 16, as best seen in Figure 5.

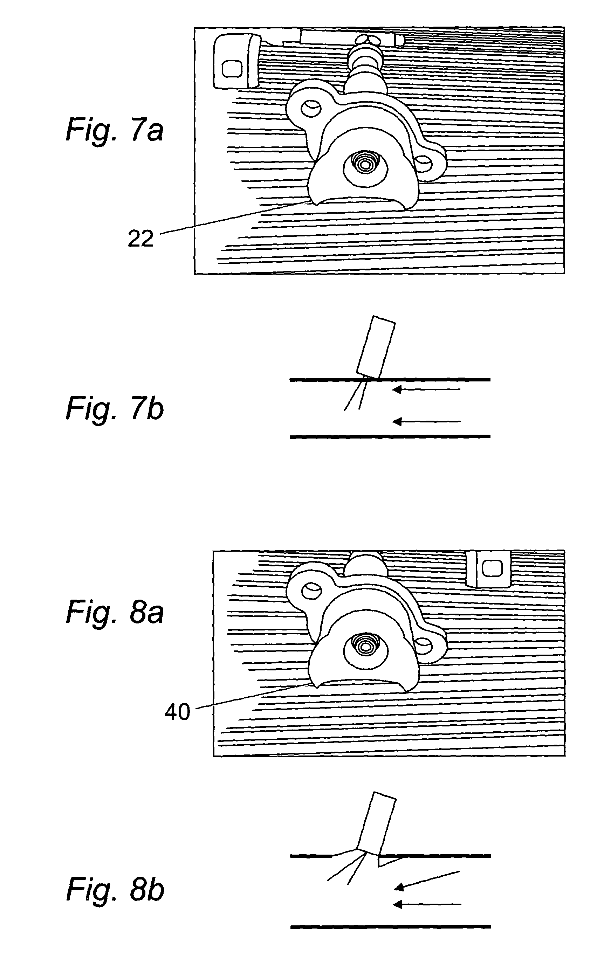

Figure 7a shows a further view of the socket 22 and attached injector 24. The position of the injector 24 in relation to the airflow, as schematically shown in Figure 7b, is important in order to achieve a good mixture of the gaseous fuel and the air. The particular positioning of the injector 24 can even have an impact on the packaging of the injectors in the air intake system, leading to limiting packaging restrictions. If the packaging around the flange or the manifold does not allow the injector spray angle to best match the airflow direction, this can result in the spray of injected fuel into the airflow being 'too straight', which will compromise the intention to best mix the air and fuel prior to their ignition.

Thus, the present invention also provides a fuel injector socket 40 as shown in Figure 8a, having a port connection portion 42, and a modified port entry portion 44. The modification include the introduction of a lip 46 in the port entry portion 44, so as to deflect air flow within the intake duct 16 and direct the injected fuel into a more aligned path with the air flow as better shown schematically in Figure 8b. Greater alignment of the injected fuel with the airflow increases the intermixing of the components, and thus their better combustion.

The shape of this lip 46 can vary, and would be tailored for each particular situation in terms of configuration of the flange or manifold, port, etc. Preferably, the lip 46 is formed integrally with the rest of the socket piece 40, thereby reducing costs and increasing ease of installation.

The present invention provides simple but effective enhancements to existing engines, both to allow the introduction of gaseous fuel, and for better mixing of the fuel and air, particularly in a restricted packaging volume.

## Claims

1. An adaptor socket (22) for connecting a gaseous fuel injector (24) to a port (4) in an intake manifold or flange (2) of an internal combustion engine, said socket being adapted to fit said port (4) and having a mounting aperture (31) for mounting a gaseous fuel injector (24) such that the gaseous fuel injector (24) can inject gaseous fuel into said intake manifold (2) via said port (4).

2. An adaptor socket as claimed in claim 1, wherein at least a portion of the socket (22) extends into said port (4).

3. An adaptor socket as claimed in claim 2, wherein said portion of the socket (22) which extends into said port terminates in a face adapted to form a continuation of the inner surface of intake manifold adjacent the port (4) into which the socket (22) is inserted.

4. An adaptor socket as claimed in claim 2, wherein the socket (22) includes a securing flange or portion (42) permitting the socket to be secured to the intake manifold.

5. An adaptor socket as claimed in claim 3, wherein said securing flange (42) includes at least one aperture (27) through which suitable fastening means can pass to secure the socket (22) to the intake manifold (2).

6. An adaptor socket as claimed in any preceding claim, wherein said mounting aperture (31) for mounting a gaseous fuel injector (24) within the socket (22) is arranged such that, when the socket (22) is connected to said intake manifold (2) and the gaseous fuel injector (24) is mounted within said mounting aperture (31), the axis of said gaseous fuel injector (24) is inclined with respect to the axis of the intake manifold port (4).

7. An adaptor socket as claimed in any preceding claim, further comprising means for enhancing the mixing of gaseous fuel and air within the intake manifold, said means comprising a lip or extension (46) provided or formed on the socket (22), said lip (46) extending into the path or passageway of incoming air within the manifold (2), upstream of a spray nozzle of the fuel injector (24).

8. An adaptor socket as claimed in any preceding claim, wherein said gaseous fuel is compressed natural gas (CNG).

9. An adaptor socket as claimed in any preceding claim, wherein said port (4) into which the socket is adapted to fit comprises an existing port provided for the installation of a port de-activation system.

10. An intake manifold having one or more adaptor sockets (22) as claimed in any preceding claims.

11. An internal combustion engine having a gasoline fuel system and one or more further manifold ports (4), wherein the or each further manifold port (4) includes an adaptor socket (22) as claimed in any of claims 1 to 9.
